# FASCICULE DE BREVET EUROPEEN

(11) **EP 3 552 930 B1**
(45) Date de publication et mention de la délivrance du brevet: **15.06.2022**
(21) Numéro de dépôt: 19168248.3
(22) Date de dépôt: 09.04.2019
(51) Int. Cl.: B62D 35/00

(54) **DISPOSITIF DE BECQUET ARRIÈRE AVEC DISPOSITIF D ABSORPTION DE FORCE POUR COMPENSER UNE FORCE ENTRE AU MOINS DEUX COMPOSANTS**
HECKSEITIGE LUFTLEITVORRICHTUNG MIT KRAFTABSORPTIONSVORRICHTUNG ZUR KOMPENSIERUNG EINER KRAFT ZWISCHEN MINDESTENS ZWEI KOMPONENTEN
REAR SPOILER DEVICE WITH FORCE ABSORPTION DEVICE TO COMPENSATE FOR A FORCE BETWEEN AT LEAST TWO COMPONENTS

(30) Priorité: 10.04.2018 FR 1853121
(43) Date de publication de la demande: 16.10.2019
(73) Titulaire: Compagnie Plastic Omnium, 69007 Lyon (FR)
(72) Inventeur: GROVER, Pawan, Manimajra Chandigarh (IN)
(74) Mandataire: LLR

(56) Documents cités:
- WO-A1-2016/083705
- WO-A1-2017/115029
- FR-A1- 2 982 568

## Description

L'invention concerne un dispositif d'absorption de force pour compenser une force entre au moins deux composants, en particulier d'un véhicule automobile, de préférence entre un becquet arrière et un hayon.

Actuellement, les panneaux de carrosserie, les becquets arrière, les hayons, les seuils et autres composants extérieurs en matière plastique des véhicules sont souvent assemblés à partir de plusieurs composants, au moins à partir de deux composants. De tels composants sont habituellement constitués de matières plastiques qui peuvent se fissurer ou se rompre sous l'action de forces défavorables, par exemple en cas de forces élevées agissant par un effet de bras de levier. En particulier, les becquets arrière qui font saillie au-delà du contour réel du véhicule, par exemple un hayon, peuvent être endommagés sous l'effet d'une force qui leur est appliquée. En particulier, lorsque des véhicules équipés de cette manière sont lavés dans des stations de lavage à rouleaux, la rotation des rouleaux peut entraîner des pics de force qui peuvent arracher ou casser des becquets arrière en saillie. Afin d'obtenir de bons résultats en terme de nettoyage, les rouleaux des stations de lavage fonctionnent à des vitesses de rotation élevées, de sorte que le niveau des forces exercées est très élevé. En particulier en cas de lavages répétés, comme cela est le cas tout au long du cycle de vie d'un véhicule, l'action de ces forces peut régulièrement conduire à des ruptures ou des fissures décrites de manière adaptée. En particulier, comme la force trouve un levier de force par une sorte de levier sur le bord extérieur du becquet arrière jusqu'à la fixation de ce becquet arrière sur la carrosserie, ou par exemple sur le hayon, ce levier de force sollicite très fortement le support par le biais d'un couple. Ainsi des forces supérieures à 1 000 N, allant jusqu'à 1 200 voire 1 500 N, peuvent s'exercer sur un composant correspondant.
La demande internationale WO 2017/115029 au nom de la demanderesse décrit un becquet arrière dont une partie est mobile. La demande internationale WO 2016/083705 également au nom de la demanderesse décrit un becquet arrière en deux parties dans lequel une deuxième partie est amovible. Enfin, le demande française FR 2 982 568 décrit un becquet arrière mobile et un voile s'étendant entre la partie mobile en position sortie et la carrosserie.

La présente invention a donc pour but de proposer un dispositif de becquet arrière comprenant un dispositif d'absorption de force, qui permet d'éviter les inconvénients de l'état actuel de la technique et en particulier de garantir une stabilité simple et fiable avec un mode de réalisation simple, et également qu'aucun dommage ne se produise lorsque des forces sont appliquées.

Le but selon la présente invention est atteint avec un dispositif de becquet arrière comprenant un dispositif d'absorption de force ayant les caractéristiques selon la présente invention. Des modes de réalisation préférés de la présente invention sont définis dans les sous-revendications.

Le dispositif de becquet arrière selon la présente invention, comprenant un dispositif d'absorption de force, ou le composant modulaire correspondant, peut en particulier faire partie intégrante d'un véhicule. Le dispositif de becquet arrière selon la présente invention, comprenant un dispositif d'absorption de force pour compenser une force entre au moins deux composants comporte au moins un premier composant et au moins un second composant. Le dispositif d'absorption de force comporte en outre au moins un élément de languette déformable et au moins un élément de tenon s'engageant au moins en partie dans l'élément de languette. L'élément de languette est déformable au moins en partie par rapport à l'élément de tenon. Cela se produit par l'intermédiaire d'un mouvement relatif entre l'élément de languette déformable et l'élément de tenon. L'élément de languette est déformable le long d'un trajet de déformation de l'élément de languette. Cela se produit en fonction d'un trajet d'application de force, agissant sur le premier ou second composant.

Selon la présente invention, la force agissant sur le premier ou second composant via le trajet d'application de force est convertie en un mouvement relatif de l'élément de tenon situé sur le premier ou second composant par le biais de l'engagement dans l'élément de languette dans un trajet de déformation de l'élément de languette, dans lequel la force qui est appliquée par le trajet d'application de force est compensée de manière correspondante par la déformation, de sorte qu'une rupture ou une déchirure du premier et/ou second composant selon la présente invention peut ainsi être évitée. Ainsi, des forces pouvant aller jusqu'à 3 000 N environ peuvent être absorbées et compensées selon la présente invention.

Pour une fixation simple de l'emplacement du premier composant et du second composant l'un par rapport à l'autre, la présente invention prévoit de relier le premier composant et le second composant l'un à l'autre par le biais d'au moins un élément de fixation. Ainsi un agencement simple d'un becquet arrière correspondant sur un hayon est fourni d'une manière techniquement simple.

En conséquence, en présence d'un tel au moins un élément de fixation, le trajet d'application de force et le trajet de déformation peuvent être espacés de manière différente par rapport à l'élément de fixation. C'est-à-dire que le trajet d'application de force forme un bras de puissance par rapport à l'élément de fixation différent du bras de puissance qui agit le long du trajet de déformation de l'élément de languette. Ainsi, un couple agissant de manière adaptée par le biais du trajet d'application de force sur l'élément de fixation, jusqu'au trajet de déformation de l'élément de languette par rapport à celui-ci, peut être augmenté ou réduit en conséquence, d'une façon techniquement simple. Ainsi, un ajustement de l'élément de tenon en fonction de la force maximale attendue, c'est-à-dire en fonction du couple maximal attendu au niveau de l'élément de fixation, peut être calculé de manière structurellement simple et l'élément de languette déformable absorbant la force peut être assemblé ou conçu de manière adaptée pour absorber la force en fonction de son épaisseur, de sa longueur ou du choix de son matériau, par exemple, sans nécessiter ici trop ou trop peu de matière.

L'élément de languette peut être déformé le long de son trajet de déformation dans plusieurs parties. Par exemple, un trajet de déformation élastique est initialement prévu le long du trajet de déformation, avec une déformation élastique de l'élément de languette et/ou un trajet de déformation plastique qui suit dans un second temps avec une déformation plastique de l'élément de languette correspondant. En outre, selon la présente invention, un élément de déformation plastique peut être en plus intégré dans l'élément de languette. Le mode de réalisation du dispositif d'absorption de force ainsi conçu selon la présente invention permet une absorption de force particulièrement élevée. Le cas échéant, dans le cas d'un élément de languette déformé ou dans le cas d'un élément de déformation déformé dans l'élément de languette, un simple remplacement de cet élément peut garantir avantageusement, selon la présente invention, la facilité d'utilisation d'un dispositif d'absorption de force conçu de manière correspondante.

Selon la présente invention, le long du trajet de déformation, avant le début du propre trajet de déformation de l'élément de languette selon la présente invention, une course libre peut être effectuée sans déformation de l'élément de languette sous l'action d'une force correspondante le long de la direction du trajet d'application de force. En d'autres termes, les deux éléments de la présente invention, l'élément de languette déformable et l'élément de tenon ne sont au début pas encore engagés l'un avec l'autre, mais ne sont amenés en engagement l'un contre l'autre que le long de la course libre. Cela peut par exemple être avantageux lorsque le dispositif d'absorption de force selon la présente invention ne peut pas être entièrement défini dans sa position de montage, par exemple lorsque des cotes d'espacement dans la zone de la carrosserie du véhicule rendent nécessaires des mesures d'adaptation et des modifications d'orientation de certains composants les uns par rapport aux autres. Il est encore ici possible d'obtenir une absorption de force fiable entre deux composants par l'intermédiaire de la course libre existante.

Afin de permettre la plus grande flexibilité possible du dispositif de becquet arrière selon la présente invention comprenant le dispositif d'absorption de force, l'élément de languette peut être localisé au niveau du premier composant et l'élément de tenon peut être localisé au niveau du second composant. Mais il est également possible de localiser l'élément de tenon au niveau du premier composant et, à l'inverse, de localiser l'élément de languette au niveau du second composant. La localisation en particulier de l'élément de languette éventuellement échangeable pour absorber la force est particulièrement flexible et peut être choisie de manière individuelle en fonction de la configuration du composant. Le terme « localisé » ou « localisation » doit être entendu, dans le contexte de l'invention décrite, au sens d'une application et/ou d'une fixation, par exemple par intégration dans un composant, par collage, par vissage et/ou par rivetage ou analogue, avec un agencement spatial avant ou pendant l'assemblage du dispositif selon la présente invention. En particulier, un dispositif de becquet arrière comprenant un dispositif d'absorption de force selon la présente invention peut être fourni, sous la forme d'un composant modulaire préassemblé, par exemple pour un montage ultérieur sur un véhicule.

Comme déjà mentionné, le dispositif selon la présente invention peut être mis en œuvre dans le cas où le premier composant est un becquet arrière et le second composant est en particulier un hayon.

L'invention concerne donc un composant modulaire généralement destiné à un montage dans un véhicule, qui comporte, en tant que dispositif de becquet arrière, le dispositif d'absorption de force selon la présente invention correspondant décrit ci-dessus avec les caractéristiques décrites. Un tel composant modulaire peut de préférence être également préassemblé en vue d'une installation ultérieure sur un véhicule.

La présente invention va être expliquée plus en détail ci-dessous et ne se limite pas aux modes de réalisation représentés uniquement à titre d'exemple non limitatif et à l'appui des figures annexées sur lesquelles :
- la Figure 1: est une vue schématique d'un véhicule automobile dans lequel un dispositif de becquet arrière comprenant un dispositif d'absorption de force selon la présente invention peut être utilisé ;
- la Figure 2: est une vue en coupe schématique selon la ligne A-A de la Figure 1 d'un dispositif de becquet arrière comprenant un dispositif d'absorption de force selon un premier mode de réalisation de la présente invention ;
- la Figure 3: est une vue en coupe schématique selon la ligne A-A de la Figure 1 d'un dispositif de becquet arrière comprenant un dispositif d'absorption de force selon un second mode de réalisation de la présente invention ; et
- la Figure 4: est une vue schématique en coupe et en perspective d'un dispositif de becquet arrière comprenant un dispositif d'absorption de force sensiblement selon le premier mode de réalisation de la présente invention de la Figure 2.

Sur les figures, des éléments identiques sont désignés par des références identiques.

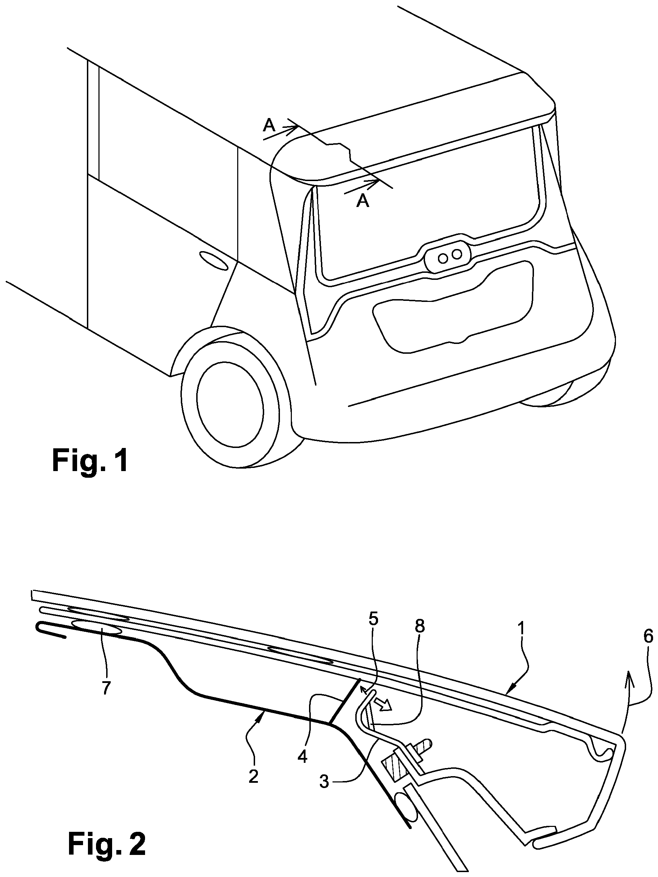

La Figure 1 est une vue schématique d'un véhicule automobile, dans lequel un dispositif de becquet arrière comprenant un dispositif d'absorption de force selon la présente invention peut être utilisé. La Figure 1 est spécifiquement une vue arrière d'un tel véhicule automobile avec un premier composant 1, à savoir un becquet arrière, qui est fixé sur un second composant 2, à savoir un hayon. Entre le premier composant 1, le becquet arrière et le second composant 2, le hayon, le dispositif d'absorption de force selon la présente invention décrit dans ce qui va suivre peut donc être utilisé, le becquet arrière en tant que premier composant 1 et le hayon en tant que second composant 2 formant un composant modulaire correspondant.

La Figure 2 est une vue schématique en coupe selon la ligne A-A de la Figure 1 d'un dispositif de becquet arrière comprenant un dispositif d'absorption de force selon un premier mode de réalisation de la présente invention. Le becquet arrière en tant que premier composant 1 est fermement relié au second composant 2 conçu comme une partie de hayon par l'intermédiaire d'au moins un élément de fixation 7, dans le cas présent par exemple un collage. Selon la présente invention, d'après le premier mode de réalisation représenté sur la Figure 2 du dispositif d'absorption de force selon la présente invention, un élément de languette 3 est fixé au becquet arrière en tant que premier composant 1 au moyen d'un vissage, et un élément de tenon 4 faisant saillie de la tôle de carrosserie du hayon est couplé au second composant 2 correspondant.

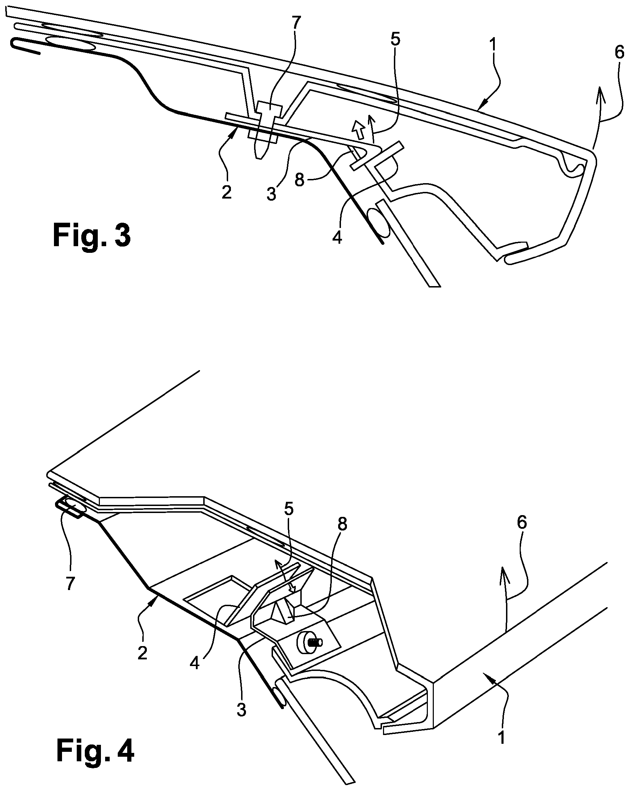

Si une force adaptée est maintenant exercée le long d'un trajet d'application de force 6 sur le premier composant 1 (vers le haut sur la Figure 2 et sur les Figures 3 et 4), le composant correspondant 1 se déforme et, au début, l'élément de languette 3 se déplace sans déformation en direction de l'élément de tenon 4 et ensuite le long d'un trajet de déformation 5 de l'élément de languette 3. A la suite du déplacement continu, l'élément de languette 3 en engagement avec l'élément de tenon 4 se déforme alors de manière relative le long du trajet de déformation 5 en fonction du mouvement supplémentaire le long du trajet d'application de force 6. Ceci est indiqué sur la Figure 2 par la flèche pleine. Si le mouvement le long du trajet de déformation 5 devait encore être déformé par le biais d'une déformation élastique, qui est réversible, une déformation plastique de l'élément de déformation plastique 8 de l'élément de languette 3, qui ne serait alors pas réversible, se produirait alors au cours du trajet de déformation plastique supplémentaire.

Selon la présente invention, une force agissant dans la zone du becquet arrière, laquelle force pouvant être considérée comme un couple appliqué à l'élément de fixation 7, peut être compensée de manière correspondante par une déformation élastique et éventuellement aussi par une déformation plastique de l'élément de languette 3. Ainsi, une déchirure ou une rupture du premier composant 1, à savoir du becquet arrière, peut ainsi être empêchée de manière fiable, même jusqu'à des pics de force agissant sur le bord du becquet allant jusqu'à 3 000 newtons.

La Figure 3 est une vue schématique en coupe d'un dispositif de becquet arrière comprenant un dispositif d'absorption de force selon un second mode de réalisation de la présente invention, tel qu'il peut également être prévu le long de la coupe A-A dans le véhicule automobile selon la Figure 1.

Le mode de réalisation du dispositif de becquet arrière selon la présente invention comprenant un dispositif d'absorption de force de la Figure 3 se distingue du mode de réalisation de la Figure 2 en ce que l'élément de fixation 7 est ici un assemblage vissé du premier composant 1, le becquet arrière, et du second composant 2, le hayon. Dans la représentation du mode de réalisation selon la Figure 3, l'élément de languette 3 est fixé par vissage avec l'élément de fixation 7 et l'élément de tenon 4 est fixé en saillie sur le premier composant 1, le becquet arrière. Ce dispositif de becquet arrière est donc conçu comme un composant modulaire préassemblé. En outre, selon le mode de réalisation de la Figure 3, entre l'élément de languette 3 et l'élément de tenon 4, aucune course libre sans déformation de l'élément de languette 3 n'est prévue avant le trajet de déformation propre 5. En position de montage, l'élément de languette 3 et l'élément de tenon 4 s'engageant dans celui-ci sont déjà en contact l'un avec l'autre. L'action de la force ou du mouvement est présentée sur la Figure 3 comme sur la Figure 2, par les flèches représentant le trajet d'application de force 6 et le trajet de déformation 5. La déformation de l'élément de languette 3 est à nouveau représentée par une flèche pleine.

La Figure 4 est une vue schématique en coupe et en perspective d'un dispositif de becquet arrière comprenant un dispositif d'absorption de force sensiblement similaire au premier mode de réalisation de la présente invention de la Figure 2. La construction de l'élément de tenon 4 apparaît clairement sous forme de pliage d'une portion de tôle du second composant 2, le hayon. Par ailleurs, le vissage de l'élément de languette 3 avec l'élément de déformation plastique 8, sur le premier composant 1, le becquet, est particulièrement bien visible sur l'illustration de la Figure 4.

Les figures ne représentent pas explicitement un mode de réalisation de la présente invention, dans lequel l'élément de languette est localisé sur le second composant, par exemple le hayon.

On notera de manière générale que les flèches représentées sur les figures représentent le trajet d'application de force et le trajet de déformation 5, et que la flèche pleine qui représente la propre déformation de l'élément de languette 3, ne sont pas à l'échelle et sont seulement destinées à illustrer schématiquement la conception selon la présente invention.

Les modes de réalisation ci-dessus ont été décrits pour illustrer des modes de réalisation possibles et il est évident pour l'homme du métier que différentes variantes des formes décrites ici peuvent être utilisées, avec la mise en œuvre des revendications, sans sortir de la portée de la présente invention. Il est attendu et même prévu que des développements de la technique présentée ici peuvent se produire, d'autant plus que les dispositifs et les composants divulgués sont donnés à titre d'exemple et ne sont pas limitatifs, de sorte que la portée de la présente invention est limitée uniquement par l'objet des revendications annexées.

## Revendications

1. Dispositif de becquet arrière comprenant un dispositif d'absorption de force pour compenser une force entre au moins deux composants (1, 2), avec au moins un premier composant (1) et au moins un second composant (2),
**caractérisé en ce que** le dispositif d'absorption de force comporte au moins un élément de languette déformable (3) et au moins un élément de tenon (4) s'engageant au moins en partie dans l'élément de languette (3), l'élément de languette (3) étant déformable par rapport à l'élément de tenon (2) le long d'un trajet de déformation (5) de l'élément de languette (3) en fonction d'un trajet d'application de force (6), agissant sur le premier (1) ou second (2) composant.

2. Dispositif selon la revendication 1, **caractérisé en ce que** le premier composant (1) et le second composant (2) sont reliés l'un à l'autre par le biais d'au moins un élément de fixation (7).

3. Dispositif selon la revendication 2, **caractérisé en ce que** le trajet d'application de force (6) et le trajet de déformation (5) sont espacés de manière différente par rapport à l'élément de fixation (7).

4. Dispositif selon au moins une des revendications 1 à 3, **caractérisé en ce que** l'élément de languette (3) a, le long de son trajet de déformation (5), un trajet de déformation élastique avec une déformation élastique de l'élément de languette (3) et/ou un trajet de déformation plastique avec une déformation plastique de l'élément de languette (3), et/ou a une course libre sans déformation de l'élément de languette (3) avant le début du trajet de déformation (5).

5. Dispositif selon la revendication 4, **caractérisé en ce que** l'élément de languette (3) comporte un élément de déformation plastique (8).

6. Dispositif selon au moins une des revendications 1 à 5, **caractérisé en ce que** l'élément de languette (3) est localisé sur le premier composant (1), et **en ce que** l'élément de tenon (4) est localisé sur le second composant (2).

7. Dispositif selon au moins une des revendications 1 à 5, **caractérisé en ce que** l'élément de tenon (4) est localisé sur le premier composant (1), et **en ce que** l'élément de languette (3) est localisé sur le second composant (2).

8. Dispositif selon au moins une des revendications 1 à 7, **caractérisé en ce que** le premier composant (1) est un becquet arrière, et **en ce que** le second composant (2) est un hayon.

## Patentansprüche

1. Heckspoilervorrichtung aufweisend eine Kraftaufnahmevorrichtung zum Ausgleichen einer Kraft zwischen mindestens zwei Komponenten (1, 2), mit mindestens einer ersten Komponente (1) und mindestens einer zweiten Komponente (2),
**dadurch gekennzeichnet, dass** die Kraftaufnahmevorrichtung mindestens ein verformbares Zungenelement (3) und mindestens ein Zapfenelement (4) aufweist, das zumindest teilweise in das Zungenelement (3) eingreift, wobei das Zungenelement (3) in Bezug auf das Zapfenelement (4) entlang eines Verformungsweges (5) des Zungenelements (3) in Abhängigkeit von einem Weg (6) einer Anwendung einer Kraft verformbar ist, die auf die erste (1) oder zweite (2) Komponente einwirkt.

2. Vorrichtung nach Anspruch 1, **dadurch gekennzeichnet, dass** die erste Komponente (1) und die zweite Komponente (2) über mindestens ein Befestigungselement (7) miteinander verbunden sind.

3. Vorrichtung nach Anspruch 2, **dadurch gekennzeichnet, dass** der Kraftanwendungsweg (6) und der Verformungsweg (5) in Bezug auf das Befestigungselement (7) unterschiedlich beabstandet sind.

4. Vorrichtung nach mindestens einem der Ansprüche 1 bis 3, **dadurch gekennzeichnet, dass** das Zungenelement (3) entlang seines Verformungsweges (5) einen elastischen Verformungsweg mit einer elastischen Verformung des Zungenelements (3) und/oder einen plastischen Verformungsweg mit einer plastischen Verformung des Zungenelements (3) aufweist und/oder vordem Beginn des Verformungsweges (5) einen freien Hub ohne Verformung des Zungenelements (3) aufweist.

5. Vorrichtung nach Anspruch 4, **dadurch gekennzeichnet, dass** das Zungenelement (3) ein plastisches Verformungselement (8) aufweist.

6. Vorrichtung nach mindestens einem der Ansprüche 1 bis 5, **dadurch gekennzeichnet, dass** das Zungenelement (3) an der ersten Komponente (1) lokalisiert ist, und dass das Zapfenelement (4) an der zweiten Komponente (2) lokalisiert ist.

7. Vorrichtung nach mindestens einem der Ansprüche 1 bis 5, **dadurch gekennzeichnet, dass** das Zapfenelement (4) an der ersten Komponente (1) lokalisiert ist, und dass das Zungenelement (3) an der zweiten Komponente (2) lokalisiert ist.

8. Vorrichtung nach mindestens einem der Ansprüche 1 bis 7, **dadurch gekennzeichnet, dass** die erste Komponente (1) ein Heckspoiler ist, und dass die zweite Komponente (2) eine Heckklappe ist.

## Claims

1. A rear spoiler device comprising a force-absorbing device for compensating a force between at least two components (1, 2), with at least a first component (1) and at least one second component (2), **characterized in that** the force absorbing device comprises at least one deformable tongue member (3) and at least one stud member (4) seated, at least partly, in the tongue member (3), the tongue member (3) being deformable with respect to the stud member(2) along a deformation path (5) within the tongue member (3) as a function of a force application path (6) acting on the first (1) or second (2) component.

2. Device according to claim 1, **characterized in that** the first component (1) and the second component (2) are connected to each other through at least one fastening member (7).

3. Device according to claim 2, **characterized in that** the force application path (6) and the deformation path (5) are spaced differently to the fastening member (7).

4. Device according to at least one of claims 1 to 3, **characterized in that** the tongue member (3) has, along its deformation path (5), an elastic deformation path including an elastic deformation of the tongue member (3) and/or a plastic deformation path with plastic deformation of the tongue member (3), and/or free travel without deformation of the tongue member (3) before the beginning of the deformation path (5).

5. Device according to claim 4, **characterized in that** the tongue member (3) comprises a plastic deformation member (8).

6. Device according to at least one of claims 1 to 5, **characterized in that** the tongue member (3) is located on the first component (1), and **in that** the stud member (4) is located on the second component (2).

7. Device according to at least one of claims 1 to 5, **characterized in that** the stud member (4) is located on the first component (1), and **in that** the tongue member (3) is located on the second component (2).

8. Device according to at least one of claims 1 to 7, **characterized in that** the first component (1) is a rear spoiler, and **in that** the second component (2) is a hatch.
